(19) Europäisches Patentamt
European Patent Office
Office européen des brevets

(11) **EP 0 831 604 B1**

(12) **EUROPÄISCHE PATENTSCHRIFT**

(45) Veröffentlichungstag und Bekanntmachung des Hinweises auf die Patenterteilung:
**21.07.1999 Patentblatt 1999/29**

(51) Int Cl.$^6$: **H04B 10/10**

(21) Anmeldenummer: **97109579.9**

(22) Anmeldetag: **12.06.1997**

(54) **Verfahren und Vorrichtung zur Kontrolle der Ausrichtung zweier Lichtwellen bei kohärentem Überlagerungsempfang**

Method and system for controlling the position of two lightwaves in heterodyne coherent reception

Procédé et dispositif de contrôle de position de deux ondes lumineuses en cas de réception hétérodyne cohérente

(84) Benannte Vertragsstaaten:
**BE CH DE FR GB IT LI SE**

(30) Priorität: **22.09.1996 CH 230796**

(43) Veröffentlichungstag der Anmeldung:
**25.03.1998 Patentblatt 1998/13**

(73) Patentinhaber: **Oerlikon Contraves AG 8050 Zürich (CH)**

(72) Erfinder:
• **Fischer, Edgar 8555 Müllheim Dorf (CH)**
• **Wandernoth, Bernhard 9533 Kirchberg (CH)**

(74) Vertreter: **Hotz, Klaus, Dipl.-El.-Ing./ETH Patentanwalt et al c/o OK pat AG Hinterbergstrasse 36 Postfach 5254 6330 Cham (CH)**

(56) Entgegenhaltungen:
• SWANSON ET AL: "Heterodyne spatial tracking system for optical space communication" IEEE TRANSACTIONS ON COMMUNICATIONS, Bd. 34, Nr. 2, Februar 1986, Seiten 118-126, XP002023623
• HUEBER ET AL: "Heterodyne acquisition and tacking in a free space diode laser link" FREE SPACE COMMUNICATION TECHNOLOGIES III, Januar 1991, LOS ANGELES, US, Seiten 233-239, XP000614761
• FUNG: "A novel angular discriminator for spatial tracking in free-space laser communications" FREE-SPACE LASER COMMUNICATION TECHNOLOGIES III, 21. - 22.Januar 1991, LOS ANGELES, US, Seiten 224-232, XP000614762
• STRAND ET AL: "Aberration limits for annular Gaussian beams for optical storage" APPLIED OPTICS, Bd. 33, Nr. 16, 1.Juni 1994, NEW YORK US, Seiten 3533-3539, XP000450247

**Beschreibung**

Die vorliegende Erfindung betrifft ein Verfahren zur Kontrolle der optischen Ausrichtung zweier Lichtwellen bei kohärentem Überlagerungsempfang zwischen Satelliten im Weltraum nach dem Oberbegriff des Patentanspruchs 1 sowie eine Vorrichtung zur Kontrolle der Ausrichtung zweier Lichtwellen bei kohärentem Ueberlagerungsempfang zwischen Satelliten im Weltraum nach dem Oberbegriff des Patentanspruchs 2.

Informationsübertragung mittels Licht ist im Weltraum eine interessante Alternative gegenüber Mikrowellen-Verbindungen, da mit der Erhöhung der Trägerfrequenz eine bessere Strahlbündelung und damit ein wesentlich grösserer Antennengewinn verbunden ist. Dieser Vorteil kann dazu ausgenutzt werden, die einzusetzenden Antennen zu verkleinern, die entsprechende Sendeleistung zu verkleinern oder die zu übertragene Datenrate zu erhöhen. Dadurch können das Gewicht und der Energieverbrauch, beides Kriterien, welche für im Weltraum zu betreibende Satellitensysteme von ausschlaggebender Bedeutung sind, reduziert werden.

In der optischen Kommunikation bieten sich sowohl der unkomplizierte , aber gegenüber Hintergrundlicht anfällige Direktempfang als auch der höchstempfindliche und deshalb für Weltraumanwendungen besonders geeignete Überlagerungsempfang an. Der Empfindlichkeitsgewinn bei Überlagerungsempfang gegenüber Direktempfang hat jedoch eine erheblich aufwendigere Realisation zur Folge und stellt ausserdem höhere Anforderungen an die verwendeten Komponenten.

Mit dem hohen Antennengewinn optischer Antennen bzw. Teleskope ist ein sehr kleiner Divergenzwinkel verbunden, weshalb eine sehr genaue Ausrichtung der Antennen zueinander notwendig ist. Die Strahlregelungssysteme müssen dabei in der Lage sein, trotz systematischer und stochastischer Bewegungen der Satelliten unterbrechungsfreie Verbindungen zu ermöglichen.

Wie bei Wittig, M. et al 'In Orbit-Measurement of Microaccelerations of ESA's Communication Satellite OLYMPUS' SPIE Proceedings, Vol. 1218 (1990), S 205-213 beschrieben, können die stochastischen Bewegungen für einen Satelliten als zwei voneinander unabhängige gaussverteilte Winkelschwankungen modelliert und interpretiert werden, die ein im folgenden wiedergegebenes Leistungsdichtespektrum $S_\varphi$ haben:

$$S_{\varphi_{xy}}(f) = \frac{160\frac{\mu rad^2}{Hz}}{1+\left(\frac{f}{1\,Hz}\right)^2}$$

wobei mit f die Frequenz der Winkelschwankungen bezeichnet ist.

Ein Teil dieser Winkelschwankungen kann durch ein Strahlregelungssystem ausgeregelt werden, und es wird eine Standardabweichung eines unkompensierten Fehlersignals jeder Komponente erhalten (Siehe Hyden, W. et al, 'Wide-band precision two axis beam steerer tracking servo design and test results', SPIE Proceedings, Vol. 1866, S. 271-279 (1993)):

$$\sigma_{\varphi_x,Rest} = \sigma_{\varphi_y,Rest} = \sqrt{\int_0^\infty S_{\varphi_{x,y}}(f)\left|G(f)\right|^2 df}$$

wobei mit $\sigma_{\varphi_x,Rest}$, $\sigma_{\varphi_y,Rest}$ die Standardabweichung des unkompensierten Fehlersignals der beiden Komponenten und mit G(f) die Störsignal-Übertragungsfunktion des Strahlregelungssystems bezeichnet sind. Die unkompensierten Winkelschwankungen hängen mit einem Schwanken der detektierten Leistung zusammen und führen zu einer Erhöhung der Fehlerwahrscheinlichkeit des Kompensationssystems.

In vielen Fällen kann die Störsignal-Übertragungsfunktion näherungsweise als Hochpass erster Ordnung mit einer Grenzfrequenz $f_g$ beschrieben werden:

$$G\left(f\right) = \frac{j\left(\dfrac{f}{f_g}\right)}{1 + j\left(\dfrac{f}{f_g}\right)}$$

Die Winkelschwankungen werden also umso besser unterdrückt, je höher die Bandbreite des Strahlregelungssystems ist.

Ein zentrales Problem bei der Strahlregelung besteht jedoch darin, ein für eine breitbandige Regelung geeignetes, rauscharmes Fehlersignal zu gewinnen.

Zur Gewinnung eines Fehlersignals bei optischen Überlagerungssystemen werden üblicherweise folgende Konzepte unterschieden:

Bei einer Gewinnung eines Fehlersignals mittels Direktempfang wird das empfangene Licht mittels eines Strahlteilers, beispielsweise eines halbdurchlässigen Spiegels, in zwei Teilstrahlen aufgeteilt. Hierbei wird ein Anteil gewöhnlich in eine Glasfaser eingekoppelt, in einem Faserkoppler mit dem Licht eines lokalen Lasers überlagert und dem kohärenten Empfänger des Kommunikationssystems zugeführt.

Ein zweiter Teil (Teilstrahl) wird einem Positionsdetektor, einer CCD-Kamera oder einer sogenannten 4-Quadranten-Photodiode zugeführt und es wird durch geeignete Auswertung der Quadranten ein Fehlersignal, im speziellen zwei räumliche Fehlersignale, erzeugt. Bildet man z.B. aus den ersten beiden Detektor-Quadranten ein Summensignal und zieht dies vom Summensignal, gebildet von den beiden anderen Quadranten, ab, so erhält man ein azimutales Fehlersignal. Durch zyklische Vertauschung der Quadranten lässt sich zudem ein Elevationsfehlersignal gewinnen *(US-PS 5,030,004).*

Dabei ist auch eine Kombination verschiedener Detektoren möglich und bekannt. Die Aufteilung des Strahls in zwei Anteile kann entfallen, falls im Sender ausser dem Kommunikationslaser ein zusätzlicher Laser anderer Wellenlänge *(BEACON)* für die Strahlregelung verwendet wird.

Die Gewinnung eines Fehlersignals ist jedoch problematisch, wenn vom Empfangsteleskop auch Hintergrundlicht eingefangen werden kann. In diesem Fall ist das Signal-Rausch-Verhältnis des Fehlersignals und damit auch die Störunterdrückung schlecht. Der für die Strahlregelung gegebenenfalls abgespaltene Anteil des Empfangslichtes steht dem Kommunikationszweig nicht zur Verfügung. Dadurch erhöht sich die für eine bestimmte Fehlerwahrscheinlichkeit notwendige Sendeleistung.

Ferner muss die Justierung der Detektoren des Strahlregelungssystems gegenüber dem Kommunikationssystem höchsten Anforderungen genügen. Die erreichbare Bandbreite der Störunterdrückung ist wegen hoher Signalverarbeitungszeiten im Falle von CCD-Kameras oder wegen des schlechten Signal-Rausch-Verhältnisses aufgrund von Hintergrundlicht in der Regel deutlich kleiner als 1 kHz.

Bei dem sogenannten Nutator-Prinzip wird die Richtcharakteristik eines Empfangsteleskops periodisch, beispielsweise durch eine kreisförmige Bewegung der Glasfaser des Empfängers verändert. Alternativ hierzu kann der Empfangsstrahl mittels beweglicher Linsen, Spiegel oder auch akusto-optisch bzw. elektro-optisch abgelenkt werden.

Falls das Empfangsteleskop hierbei nicht optimal ausgerichtet ist, schwankt die vom Empfänger detektierte Lichtleistung. Durch geeignete Demodulation dieser detektierten Leistung kann ein Fehlersignal für die Strahlregelung erzeugt werden. Zur Akquisition des Empfangsstrahls wird auch hier zusätzlich meist eine CCD-Kamera verwendet.

Nachteilig bei diesem vorstehend skizzierten Nutator-Prinzip ist, dass bei solchen Verfahren die maximal erreichbare Bandbreite der Störunterdrückung etwa ein Zehntel der Frequenz der dem Empfangsstrahl überlagerten Kreisbewegung ist. Die Drehfrequenz muss hierbei für optische Satelliten-Kommunikation üblicherweise grösser als 10 kHz sein und stellt im Falle einer mechanischen Ablenkung des Empfangsstrahls bzw. der Glasfaser des Empfängers höchste Anforderungen an die verwendeten Komponenten. Daher erscheint die Verwendung solcher Komponenten im Weltraum nicht unproblematisch.

Dieser Nachteil ist beispielsweise bei einer elektro-optischen bzw. akusto-optischen Strahlablenkung vermieden, wobei dies in der Regel jedoch mit teilweise erheblichen optischen Verlusten verbunden ist.

Die Gewinnung des Fehlersignals für räumliche Strahlregelung erfolgt bei den elektro-optischen bzw. elektroakustischen Systemen meistens mittels synchroner Demodulation der detektierten optischen Leistung. Hierbei muss beispielsweise die von der Temperatur abhängige Phasenverschiebung der an der Strahlregulierung beteiligten Komponenten berücksichtigt und ausgeregelt werden. Ein in der Praxis unvermeidbarer Resffehler führt hierbei ebenso wie die Kreisbewegung der Empfangscharakteristik um ihr Maximum zu einem systematischen Verlust an Empfindlichkeit.

Aus der europäischen Patentanmeldung *EP-A2- 0 642 236* ist ein Verfahren zum Gewinnen von Fehlersignalen für eine räumliche Strahlregelung eines optischen Überlagerungsempfängers bekannt, bei welchem eine Anordnung von Silizium-Photodioden zum kohärenten Empfangen eines Datensignals und zum direkten Empfangen von Fehlersignalen benutzt wird.

Aufgabe der Erfindung ist es daher, ein Verfahren und eine Vorrichtung der eingangs genannten Art vorzuschlagen, bei welchem welchen ein Fehlersignal für eine räumliche Strahlregelung eines optischen Überlagerungsempfängers unter weitgehender Vermeidung der systematischen Verluste und unter gleichzeitiger minimaler Beeinträchtigung des zu übertragenden Datensignals mit einem guten Signal-Rausch-Verhältnis erzeugbar ist.

Diese Aufgabe wird erfindungsgemäss durch die Merkmale der kennzeichnenden Teile der Patentansprüche 1 bzw. 2 gelöst.

Es wird somit eine Informationslichtwelle einem Empfangsteleskop zugeführt, in welchem Mittel zur Zentralabschattung vorgesehen sind, der Informationslichtwelle Licht eines lokalen Lasers überlagert wird, die Informationslichtwelle einer Detektoranordnung zur Erzeugung eines räumlichen Fehlersignals zugeführt wird, die Detektoranordnung wenigstens je zwei Detektorenhälften umfasst, bei der Feldverteilung über die je zwei Detektorenhälften durch Strahlformung eines lokalen Lasers annähernd gleiche Feldverteilung erzeugt wird.

Weitere vorteilhafte Ausgestaltungen der Vorrichtung ergeben sich aus den abhängigen Ansprüchen.

Nachfolgend wird die Erfindung anhand von bevorzugten Ausführungsformen unter Bezugnahme auf die Zeichnungen im einzelnen beschrieben. Es zeigen:

**Fig. 1**     eine Prinzipdarstellung des erfindungsgemässen Verfahrens

**Fig. 2**     ein Ausführungsbeispiel einer Vorrichtung zur Durchführung des Verfahrens.

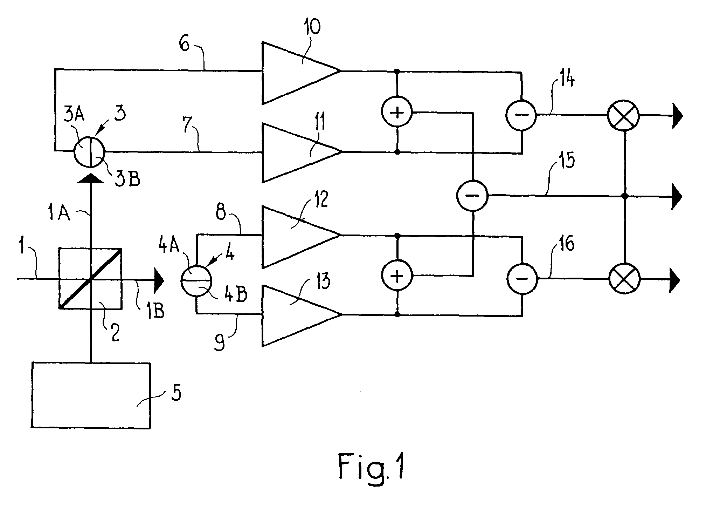

**Fig. 1** zeigt ein Prinzipschema des Vorgehens beim kohärenten Empfangen eines Datensig-nals **1** in Kombination mit der Verwendung sogenannt balanzierter Detektoren **3**, **4**. Die balanzierte Detektorschaltung eignet sich beim kohärenten Empfang zur Unterdrückung des Amplitudenrauschens des lokalen Oszillators, im vorliegenden Ausführungsbeispiel wird dafür ein lokaler Laser **5** verwendet. Dabei wird das empfangene Datensignal **1** über einen Strahlenteiler **2** in zwei Teilstrahlen **1A** und **1B** aufgeteilt und dann den balanzierten Detektoren **3**, **4** zugeführt. Mit dieser Schaltungstechnik wird der Signal-Rauschabstand um den Faktor 2 verbessert und gleichzeitig das Amplitudenrauschen des Lokaloszillators unterdrückt.

Von den beiden Detektoren **3**, **4**, die je aus zwei Halbdetektoren **3A**, **3B** und **4A**, **4B** aufgebaut sind, werden somit je zwei Differenzsignale **6**, **7** bzw. **8**, **9** erzeugt und durch vorzeichengerechte Addition ein räumliches Fehlersignal **14**, **16** generiert.

Die entsprechenden Differenzsignale **6**, **7** bzw. **8**, **9** werden vor der vorzeichengerechten Addition noch durch entsprechende Front-End-Verstärker **10**, **11** bzw. **12**, **13** verstärkt.

Durch die Bildung des Summensignals **15** aus den vier Halbdetektoren **3A**, **3B**, **4A**, **4B** lässt sich nach wie vor das die zu übertragende Information enthaltende Datensignal **1** erzeugen.

Ein weiteres Problem stellt sich bei der Übertragung hoher Datenraten ($>10^7$ Bits pro Sekunde) dadurch, dass aufgrund der hohen elektrischen Bandbreite, die erzielt werden muss, die Notwendigkeit besteht, die Detektoren möglichst klein auszuführen. Dieses Problem wird dadurch gelöst, dass das empfangende Licht mit Hilfe je einer Linse (Fokussieroptik) auf die Detektoranordnung fokussiert wird, so dass die empfangene 'Planwelle' (ein am Eingang des Strahlteilers erscheinender -bereits eine grosse Strecke zurückgelegter- Lichtstrahl) fokussiert wird. Durch die Fokussieroptik vor der Photodetektoranordnung erfolgt schliesslich eine mehr oder weniger exakte optische Fouriertransformation.

Weiter ist die Amplitudenverteilung des lokalen Laserstrahls in der Regel total verschieden von der des empfangenden Lichtstrahls. Häufig weist die Amplitudenverteilung des lokalen Lasers auf dem Detektor eine gaussförmige, die des empfangenden Lichtstrahls eine Airy Verteilung, auf. Dadurch weist die elektromagnetische Feldverteilung unmittelbar vor der Photodetektor-Anordnung zwei unterschiedliche Feldverteilungen auf, die dazu führen, dass nicht das maximal mögliche Photodiodensignal, d.h. der maximal mögliche Photostrom, generiert wird. Quantitativ wird der sogenannte Mischwirkungsgrad durch diese unterschiedliche Feldverteilung gemindert.

Erfindungsgemäss wird diese Mischeffizienz, vielmehr der Mischwirkungsgrad nun dadurch verbessert, dass einerseits eine geeignete Strahlformung des lokalen Lasers vorgenommen wird und dass andererseits eine entsprechende Energieumverteilung -notwendig wegen der streifenförmigen Lücke zwischen den beiden Detektorhälften, da sonst zu hohe Energieverluste in der Lücke- des Empfangssignals in der Detektorebene vorgenommen wird. Diese Umverteilung der Energie aus dem Zentrum heraus in die Seitenbänder wird durch eine Zentralabschattung in der Empfangsoptik bewerkstelligt.

Die Methoden der Strahlformung des lokalen Lasers **5** entsprechen gängigem Stand der Technik und sind daher der Übersichtlichkeithalber hier nicht dargestellt.

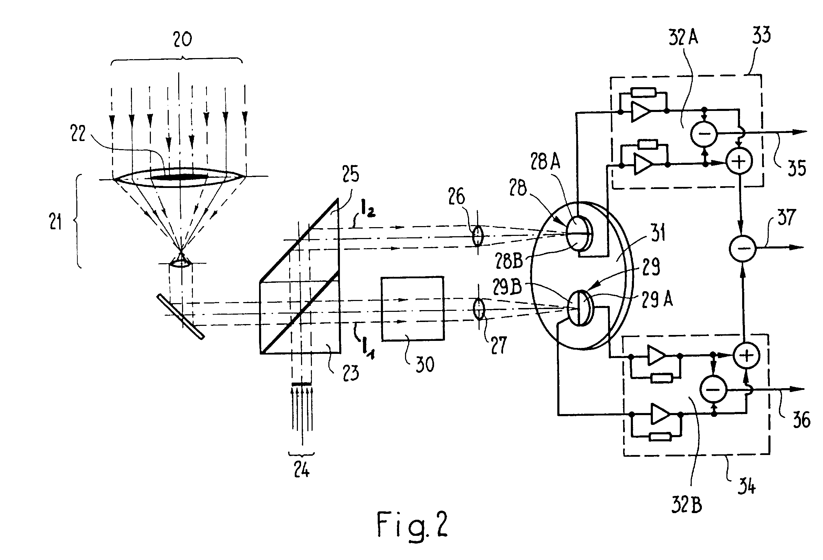

**Fig. 2** zeigt schematisch ein Ausführungsbeispiel einer Vorrichtung zur Durchführung des Verfahrens. Dabei trifft ein Empfangssignal **20** auf ein Empfangsteleskop **21**, das eine Zentralabschattung **22** aufweist. Diese Zentralabschattung **22** verursacht, dass bei der Fokussierung auf die Detektoren **28, 29** ein signifikanter Teil der Energie des ankommenden Empfangssignals ('plane Welle') aus dem Zentrum heraus in die Seitenbänder verlagert wird. Über einen Strahlteiler **23** wird im weiteren (im 90° Winkel zum Empfangssignal **20**) das Licht eines lokalen Lasers **24**, dessen Strahl, wie schon vorgängig beschrieben, so geformt ist, dass die Mischeffizienz optimiert ist, in den Lichtstrom eingekoppelt. Dieser überlagerte Lichtstrom I wird infolge des Wirkungsprinzips des Strahlteilers **23** in zwei Anteile $I_1$, $I_2$ aufgeteilt, wobei der eine Anteil $I_1$ über ein Umlenkprisma **25** auf eine erste dünne Linse **26** geleitet, dort fokussiert und anschliessend einem ersten Detektor **28** zugeführt wird. Der zweite Anteil $I_2$ des Lichtstromes wird am Strahlteiler **23** entnommen und über eine Kompensationsplatte **30** und eine zweite dünne Linse **27** zum Fokussieren des zweiten Anteil $I_2$ des Lichtstromes einem zweiten Detektor **29** zugeführt. Die Kompensationsplatte **30** dient dazu die Laufzeit in bezug auf den optisch längeren Weg des ersten Anteils $I_1$ gegenüber dem zweiten Anteil $I_2$ des Lichtstromes auszugleichen.

Um die beiden räumlichen Fehlersignale zu generieren, sind nun die beiden Detektoren, der erste Detektor **28** und der zweite Detektor **29,** je in zwei Hälften **28A, 28B** und **29A, 29B** unterteilt. Die Trennung besteht aus einem streifenförmigen Unterbruch in der Photodiodenelektrodenfläche. An jedem Detektor erhält man dadurch -wie schematisch jeweils durch einen Strich in der Zeichnung zwischen **28A** und **28B** beziehungsweise zwischen **29A** und **29B** angedeutet- ein Differenzsignal aus den beiden Detektorhälften, d.h. ein Fehlersignal in jeweils einer Raumrichtung. Die beiden Detektoren **28, 29** sind nun so angeordnet, dass die beiden streifenförmigen Unterbrüche orthogonal zueinander stehen, so dass man mit dieser Anordnung zwei Fehlersignale **35, 36** in zwei zueinander senkrechten Raumrichtungen erhält.

Aufgrund der vorstehend erwähnten Energieverlagerung in die Seitenbänder ist somit weiterhin dafür gesorgt, dass in der streifenförmigen Lücke zwischen den beiden Hälften **28A, 28B** und **29A, 29B** der beiden Detektoren **28** und **29** geringere Energieverluste zum Tragen kommen.

Die beiden Detektoren **28** und **29** sind auf einem gemeinsamen Substrat **31** untergebracht (siehe vergrösserte perspektivische Darstellung in **Fig. 2**). Weiterhin sind eine an sich bekannte balancierte Front-End Verstärker-Anordnung **32A, 32B** jeweils am Ausgang der beiden Detektoren **28** und **29** vorgesehen.

Es ist besonders vorteilhaft, die Front-End Verstärker-Anordnung **32A, 32B** ebenfalls auf dem Substrat **31** als Einheiten **33, 34** anzuordnen.

Ein elektrisches Summensignal **37** ergibt wieder die Information aus dem empfangenden optischen Empfangssignal **20**, so dass aus diesem Signal nicht nur die Kommunikation realisiert werden kann, sondern ein Fehlersignal erzeugt werden konnte.

In den Anordnungen nach **Fig. 1 und 2** sind vorzugsweise zwei Mischer vorhanden, wobei der eine Mischer eingangsseitig einerseits mit dem Fehlersignal **14 (Fig. 1)** bzw. **35 (Fig. 2)** und andererseits mit dem Datensignal **15 (Fig. 1)** bzw. **37 (Fig. 2)** beaufschlagt wird, wobei der andere Mischer eingangsseitig einerseits mit dem Fehlersignal **16 (Fig. 1)** bzw. **36 (Fig. 2)** und andererseits mit dem Datensignal **15 (Fig. 1)** bzw. **37 (Fig. 2)** beaufschlagt wird. Zwischen dem Empfangsteleskop **21** und dem Strahlteiler **23** befindet sich ein zweiachsiges Strahlabschaltsystem, zum Beispiel in Form eines Kippspiegels das durch die Regelsignale an den Ausgängen dieser zwei Mischer in den Koordinaten **x** und **y** geregelt wird, die sich in einer senkrecht zum Strahlengang des Empfangsteleskops **21** verlaufenden Ebene befinden.

Die im Sender erzeugte monochromatische Lichtwelle ist phasenmoduliert. Vorzugsweise wird das digitale Datensignal im Sender über einen Verwürfler (Scrambler) geführt, bevor die Lichtwelle mit dem Datensignal moduliert wird. Das Datensignal liegt vorzugsweise im Bereich zwischen 1 und 10 Gigabit/s. Die Anordnungen nach **Fig. 1** und **2** im Empfänger können dann einen entsprechenden Entwürfler (Discrambler) aufweisen, der mit dem Datensignal **15** bzw. **37** beaufschlagt wird. Dadurch können störende sich langsam verändernde Gleichspannungskomponenten des Datensignals **15** bzw. **37** weitgehend eliminiert werden, die sich ergeben, wenn gelegentlich zuviele Einsen oder Nullen nacheinander kommen.

In **Fig. 2** ist die Abschattung **22**, die sich beispielsweise in der einen Linse des Empfangsteleskops **21** befinden kann, schematisch durch einen Strich dargestellt. Diese Abschattung bewirkt durch beugungsoptische Effekte eine Modifizierung des Beugungsbilds, derart, dass sich - in Vergleich zu einem typischen Beugungsbild ohne Abschattung - ein Teil der Energie des ankommenden Signals aus dem Zentrum des geometrischen oder optischen Strahlengangs heraus in die Seitenbänder verlagert. Dadurch ergibt sich, dass das hohe Maximum (maximum maximorum) im Zentrum eines typischen Beugungsbildes etwas verringert wird, während die seitlichen abklingenden (kleineren, relativen) Maxima etwas erhöht werden. Besonders interessant sind dabei die zwei etwa gleich grossen relativen Maxima, die sich je an einer Seite des hohen absoluten Zentralmaximums befinden, in dessen Bereich die Breite zwischen seinen Nulldurchgängen etwa doppelt so gross wie die entsprechende Breite der relativen Maxima ist. Ein typisches Beugungsbild ist einem bandbegrenzten Impuls mit $cos^2$ -Spektrum und Nulldurchgängen bei **t = iT (i = 1, 2, 3 ...)** ähnlich.

Die Strahlformung des lokalen Lasers **5** bzw. **24** wird derart vorgenommen, dass der Laserstrahl bei den zwei Detektorenhälften eine elektrische Feldverteilung erzeugt, die in seiner Form annähernd gleich der elektrischen Feldverteilung ist, die sich in den zwei Detektorenhälften **3A, 3B, 28A, 28B** bzw. **4A, 4B, 29A, 29B** durch die empfangene Informationslichtwelle ergibt, die ein durch die Abschattung **22** modifiziertes Beugungsbild aufweist, wobei insbesondere beide Feldverteilungen zumindest angenähert dieselben Nulldurchgänge aufweisen. Im Strahlengang des lokalen Lasers kann daher zu diesem Zweck ebenfalls eine Abschattung vorhanden sein.

Zwischen den Detektoren **3** und **4** bzw. **28** und **29** ergibt sich eine Gesamtphasendifferenz oder Phasensprung von 180°. Durch Subtraktion der Ausgangssignale (Datenteilsignale) beispielsweise der Einheiten **33** und **34** ergibt sich daher das Nutzsignal **37** als Summe der absoluten Werte der zwei Teilsignale. Die Teilstrahlen **1A** und **1B (Fig. 1)** bzw. $I_1$ und $I_2$ sind gleichartig linear polasisiert. Die beispielsweise runde Platte **31 (Fig. 2)** ist vorzugsweise ein Halbleitersubstrat, auf welcher die Photodetektoren **28, 29** montiert sind. Der lokale Laser lässt sich mit Hilfe von an sich bekannten Mitteln phasenstarr mit der empfangenen Trägerwelle koppeln, um einen Homodynempfang zu erzielen.

## Patentansprüche

1. Verfahren zur Kontrolle der optischen Ausrichtung zweier Lichtwellen bei kohärentem Überlagerungsempfang zwischen Satelliten im Weltraum,
   **dadurch gekennzeichnet, dass**

   - eine Informationslichtwelle **(1; 20)** einem Empfangsteleskop **(21)** zugeführt wird,
   - der Informationslichtwelle **(1; 20)** Licht eines lokalen Lasers **(5; 24)** überlagert wird,
   - die Informationslichtwelle **(1; 20)** nach der Zumischung des Lichts des lokalen Lasers **(5; 24)** via einem Strahlteiler **(2; 23)** in zwei nahezu identische Strahlanteile **(1A, 1B;** $I_1$, $I_2$**)** aufgeteilt wird,
   - diese Strahlanteile je einem Detektor **(3, 4; 28, 29)** zur Erzeugung von mindestens zwei Anteilen eines räumlichen Fehlersignals **(14, 16; 35, 36)** zugeführt werden,
   - die Detektoren **(3, 4; 28, 29)** wenigstens je zwei Detektorenhälften **(3A, 3B, 4A, 4B; 28A, 28B, 29A, 29B)** umfassen, und
   - die Strahlformung des lokalen Lasers **(5; 24)** derart vorgenommen wird, dass die Form der Feldverteilung des Laserstrahls über die je zwei Detektorenhälften **(3A, 3B, 4A, 4B; 28A, 28B, 29A, 29B)** annähernd gleich der Feldverteilung ist, die sich für diese Strahlanteile **(1A, 1B;** $I_1$, $I_2$**)** in diesen Detektorenhälften ergibt.

2. Vorrichtung zur Kontrolle der optischen Ausrichtung zweier Lichtwellen bei kohärentem Ueberlagerungsempfang zischen Satelliten im Weltraum zwecks Durchführung des Verfahrens nach Anspruch **1**,
   **gekennzeichnet durch**

   - ein Empfangsteleskop **(21)** zum Empfangen einer Informationslichtwelle **(1; 20)**,
   - eine Laserlichtquelle **(5; 24)** zum Emittieren von Licht, welches der Informationslichtwelle **(1; 20)** überlagert wird,
   - einen Strahlteiler **(2; 23, 25)** zum Aufteilen der mit dem Licht der Laserlichtquelle **(5; 24)** überlagerten Informationslichtwelle **(1; 20)** in zwei nahezu identische Strahlenanteile **(1A, 1B;** $I_1$,$I_2$**)**, welche dazu bestimmt sind, Anteile eines räumlichen Fehlersignals zu bilden,
   - zwei Detektoren **(3, 4; 28, 29)**, wobei jedem Detektor einer der Strahlenanteile **(1A; I1,** oder **1B; I2)** zur Erzeugung eines Anteils eines räumlichen Fehlersignals **(14; 35** bzw. **16; 36)** zugeführt wird,
   - wobei jeder der Detektoren wenigstens zwei Detektorenhälften umfasst, und
   - wobei Mittel vorhanden sind, um die Strahlung der Laserlichtquelle so zu formen, dass die Form des Laserlichtstrahles über die je zwei Detektorenhälften annähernd gleich der Feldverteilung ist, die sich für die Strahlanteile in diesen Detektorhälften ergibt.

3. Vorrichtung nach Anspruch **2**,
   **dadurch gekennzeichnet, dass**
   ein Empfangsteleskop **(21)** und ein Strahlteiler **(2; 23, 25)** eine optische Einheit bilden, die mit zwei elektronischen Einheiten **(33, 34)** zusammenwirkt, dass beide elektronische Einheiten je einen mit einem Front-End-Verstärker **(32A, 32B)** verbundenen Detektor **(28, 29)** mit zwei identischen Detektorhälften **(3A, 3B, 4A, 4B; 28A, 28B, 29A, 29B)** umfassen, die jeweils durch eine streifenförmige Unterbrechung (Lücke) in der Photodiodenelektrodenfläche zwischen den benachbarten Hälften **(3A, 3B; 28A, 28B** bzw. **4A, 4B; 29A, 29B)** getrennt sind.

4. Vorrichtung nach Anspruch **3**,
   **dadurch gekennzeichnet, dass**

im Empfangsteleskop **(21)** Mittel zu einer Zentralabschattung **(22)** vorhanden sind.

5.  Vorrichtung nach Anspruch **3** oder **4**,
    **dadurch gekennzeichnet, dass**
    den beiden Detektoren **(28, 29)** je eine dünne Linse **(26, 27)** vorgeschaltet sind, wobei der einen Linse **(27)** vorzugsweise eine Kompensationsplatte **(30)** vorgeschaltet ist,
    und/oder dass beide Detektoren **(28, 29)** auf einem gemeinsamen Substrat **(31)** angeordnet sind.

6.  Vorrichtung nach einem der Ansprüche **3** bis **5**,
    **dadurch gekennzeichnet, dass**
    die Lücken zwischen den zwei identischen Detektorhälften **(3A, 3B; 28A, 28B** bzw. **4A, 4B; 29A, 29B)** orthogonal
    zueinander angeordnet sind.

7.  Vorrichtung nach einem der Ansprüche **3** bis **6**,
    **dadurch gekennzeichnet, dass**
    zwei Mischer vorhanden sind, wobei der eine Mischer eingangsseitig einerseits mit dem ein Fehlersignal **(35)**
    liefernden Differenzsignal-Ausgang der einen Einheit **(33)** und andererseits mit dem Ausgang eines an einen Summensignal-Ausgang dieser Einheit **(33)** angeschlossenen Subtrahierers verbunden ist, wobei der andere Mischer
    eingangsseitig einerseits mit dem ein Fehlersignal **(36)** liefernden Differenzsignal-Ausgang der anderen Einheit
    **(34)** und andererseits mit dem Ausgang des an einen Summensignal-Ausgang dieser anderen Einheit **(34)** angeschlossenen Subtrahierers verbunden ist, der das Datensignal liefert, und wobei die Ausgangssignale dieser zwei
    Mischer die Kontroll-Fehlersignale für zwei Koordinaten sind.

8.  Vorrichtung nach einem der Ansprüche **3** bis **7**,
    **dadurch gekennzeichnet, dass**
    beide Front-End-Verstärker **(32A, 32B)** und Mischer gemeinsam auf dem Substrat **(31)** untergebracht sind.

9.  Vorrichtung nach einem der Ansprüche **4** bis **8**,
    **dadurch gekennzeichnet, dass**
    im Strahlengang des lokalen Lasers ebenfalls eine Abschattung vorhanden ist.

## Claims

1.  Method for verifying the optical alignment of two light waves in coherent heterodyne reception between satellites
    in space,
    characterised in that

    - an information light wave (1; 20) is sent to a receiving telescope (21),
    - light from a local laser (5; 24) is superimposed on the information light wave (1; 20),
    - after blending the light from the local laser (5; 24), the information light wave (1; 20) is split via a beam splitter
      (2; 23) into two virtually identical beam components (1A, 1B; $I_1$, $I_2$),
    - these beam components are sent to a respective detector (3, 4; 28, 29) for generating not less than two
      components of a spatial error signal (14, 16; 35, 36),
    - the detectors (3, 4; 28, 29) comprise at least two respective detector halves (3A, 3B, 4A, 4B; 28A, 28B, 29A,
      29B), and
    - the beam shaping by the local laser (5; 24) is carried out in such a way that the form of the field distribution
      of the laser beam via the respective two detector halves (3A, 3B, 4A, 4B; 28A, 28B, 29A, 29B) is approximately
      the same as the field distribution that is produced for these beam components (1A, 1B; $I_1$, $I_2$) in these detector
      halves.

2.  Device for verifying the optical alignment of two light waves in coherent heterodyne reception between satellites
    in space, for the purpose of implementing the method claimed in Claim 1,
    characterised by

    - a receiving telescope (21) for receiving an information light wave (1; 20),
    - a laser light source (5; 24) for emitting light which is superimposed on the information light wave (1; 20),
    - a beam splitter (2; 23, 25) for splitting the information light wave (1; 20) upon which the light from the laser light source (5; 24) has been superimposed into two virtually identical beam components (1A, 1B; $I_1$, $I_2$) which are designed to constitute components of a spatial error signal,

- two detectors (3, 4; 28, 29), one of the beam components (1A; I1 or 1B; I2) being sent to each detector for generating a component of a spatial error signal (14; 35 and 16; 36, respectively),
- each of the detectors comprising not less than two detector halves, and
- means being provided for shaping the radiation from the laser light source in such a way that the form of the laser light beam over the two respective detector halves is approximately the same as the field distribution that is produced for the beam components in these detector halves.

3. Device according to claim 2,
   characterised in that
   a receiving telescope (21) and a beam splitter (2; 23, 25) constitute an optical unit which cooperates with two electronic units (33, 34), that each of the two electronic units contains a detector (28, 29) which is connected to a front-end amplifier (32A, 32B) and has two identical detector halves (3A, 3B, 4A, 4B; 28A, 28B, 29A, 29B) which are in each case separated by a ribbon-shaped break (gap) in the photodiode electrode surface between the adjacent halves (3A, 3B; 28A, 28B, and 4A, 4B; 29A, 29B, respectively).

4. Device according to claim 3,
   characterised in that
   in the receiving telescope (21) there are means for central obstruction (22).

5. Device according to claim 3 or 4,
   characterised in that

   a thin lens (26, 27) precedes each of the two detectors (28, 29), with a compensating plate preferably preceding the one lens (27),
   and/or that both detectors (28, 29) are disposed on a common substrate (31).

6. Device according to any of claims 3 to 5,
   characterised in that
   the gaps between the two identical detector halves (3A, 3B; 28A, 28B, and 4A, 4B; 29A, 29B, respectively) are disposed orthogonally with respect to one another.

7. Device according to any of claims 3 to 6,
   characterised in that
   two mixers are provided, the one mixer being connected on the input side on the one hand to the differential signal output of the one unit (33), which output supplies an error signal (35), and on the other hand to the output of a subtractor linked to a summation signal output of said unit (33), and the other mixer being connected on the input side on the one hand to the differential signal output of the other unit (34), which output supplies an error signal (36), and on the other hand to the output of the subtractor linked to a summation signal output of said other unit (34), which subtractor supplies the data signal, and the output signals of these two mixers being the verification error signals for two coordinates.

8. Device according to any of claims 3 to 7,
   characterised in that
   the two front-end amplifiers (32A, 32B) and mixers are jointly accommodated on the substrate (31).

9. Device according to any of claims 4 to 8,
   characterised in that
   there is also an obstruction in the beam path of the local laser.


**Revendications**

1. Procédé pour commander l'alignement optique de deux ondes lumineuses dans le cas d'une réception superhétérodyne cohérente entre des satellites dans l'espace,
   caractérisé en ce que :

- une onde lumineuse d'information (1 ; 20) est envoyée à un télescope de réception (21),
- la lumière d'un laser local (5 ; 24) est superposée à l'onde lumineuse (1 ; 20),
- après qu'elle a reçu en mélange la lumière du laser local (5 ; 24) l'onde lumineuse d'information (1 ; 20) est subdivisée par l'intermédiaire d'un diviseur de faisceau (2 ; 23) en deux composantes presque identiques de faisceau (1A, 1B ; $I_1$, $I_2$),
- ces composantes de faisceau sont envoyées à des détecteurs respectifs (3, 4 ; 28, 29) pour la production d'au moins deux composantes d'un signal spatial d'erreur (14, 16 35, 36),
- les détecteurs (3, 4 ; 28, 29) comprennent au moins chacun deux moitiés (3A, 3B, 3A, 4B ; 28A, 28B, 29A, 29B) et
- la formation de faisceau du laser local (5 ; 24) est exécutée de telle sorte que la forme de la répartition du champ du faisceau laser entre les deux moitiés respectives (3A, 3B, 3A, 4B ; 28A, 28B, 29A, 29B) des détecteurs est approximativement identique à la distribution du champ que l'on obtient pour ces composantes de faisceau (1A, 1B ; $I_1$, $I_2$) dans ces moitiés de détecteurs.

2. Dispositif pour contrôler l'alignement optique de deux ondes lumineuses dans le cas d'une réception superhétérodyne cohérente entre des satellites dans l'espace pour la mise en oeuvre du procédé selon la revendication 1, caractérisé par

- un télescope de réception (21) pour recevoir une onde lumineuse d'information (1 ; 20),
- une source de lumière laser (5 ; 24) pour émettre une lumière, qui est superposée à l'onde lumineuse d'information (1 ; 20),
- un diviseur de faisceau (2 ; 23, 25) pour subdiviser l'onde lumineuse d'information (1 ; 20) superposée à la lumière de la source de lumière laser (5 ; 24) en deux composantes de rayonnement approximativement identiques (1A, 1B ; $I_1$, $I_2$) qui sont destinées à former des composantes d'un signal spatial d'erreur,
- deux détecteurs (3, 4 ; 28, 29), l'une des composantes de rayonnement (1A ; I1 ou 1B ; I2) étant envoyée à chaque détecteur pour la production d'une composante d'un signal spatial d'erreur (14 ; 35 ou 16 ; 36),
- dans lequel chacun des détecteurs comporte au moins deux moitiés de détecteur, et
- des moyens sont prévus pour mettre en forme le rayonnement de la source de lumière laser de telle sorte que la forme du faisceau de lumière laser passant par les deux moitiés respectives des détecteurs est approximativement égale à la distribution du champ, que l'on obtient pour les composantes de faisceau dans ces moitiés des détecteurs.

3. Dispositif selon la revendication 2,
caractérisé en ce
qu'un télescope de réception (21) et un diviseur de faisceau (2 ; 23, 25) forment une unité optique, qui coopère avec deux unités électroniques (33, 34), que les deux unités électroniques comportent chacune un détecteur (28, 29) qui est relié à un amplificateur frontal (32A, 32B) et comporte deux moitiés identiques (3A, 3B, 4A, 4B ; 28A, 28B, 29A, 29B) qui sont séparées respectivement par une interruption (intervalle vide) en forme de bande dont la surface des électrodes de photodiodes entre les moitiés voisines (3A, 3B ; 28A, 28B ou 4A, 4B ; 29A, 29B).

4. Dispositif selon la revendication 3,
caractérisé en ce
que des moyens (22) pour réaliser une occultation centrale sont prévus dans le télescope de réception (21).

5. Dispositif selon la revendication 3 ou 4,
caractérisé en ce
que des lentilles minces respectives (26, 27) sont installées en avant des deux détecteurs (28, 29), de préférence une plaque de compensation (30) étant disposée en avant d'une lentille (27), et/ou que les deux détecteurs (28, 29) sont disposés sur un substrat commun (31).

6. Dispositif selon l'une des revendications 3 à 5,
caractérisé en ce
que les intervalles vides entre les deux moitiés identiques (3A, 3B ; 28A, 28B ou 4A, 4B ; 29A, 29B) des détecteurs sont perpendiculaires entre eux.

7. Dispositif selon l'une des revendications 3 à 6,
caractérisé en ce
que deux mélangeurs sont prévus, un mélangeur étant relié côté entrée d'une part à la sortie de signal différentiel, qui délivre un signal d'erreur (35) d'une unité (33), et d'autre part à la sortie d'un soustracteur connecté à une sortie du signal somme de cette unité (33), tandis que l'autre mélangeur est relié côté entrée d'une part à la sortie de signal différentiel, qui délivre un signal d'erreur (36), de l'autre unité (34) et d'autre part à la sortie du soustracteur qui est connecté à la sortie du signal somme de cette autre unité (34) et qui délivre le signal de données, et que les signaux de sortie de ces deux mélangeurs sont les signaux d'erreurs de contrôle pour deux coordonnées.

8.  Dispositif selon l'une des revendications 3 à 7,
    caractérisé en ce
    que les deux amplificateurs frontaux (32A, 32B) et les mélangeurs sont disposés en commun sur le substrat (31).

9.  Dispositif selon l'une des revendications 4 à 8,
    caractérisé en ce
    qu'un dispositif d'occultation est également présent dans le trajet du rayonnement du laser local.

Fig.1

Fig.2